Europäisches Patentamt

European Patent Office

Office européen des brevets

(19)

(11) Numéro de publication: **0 232 642 B1**

(12) **FASCICULE DE BREVET EUROPEEN**

(45) Date de publication de fascicule du brevet: **27.01.93** (51) Int. Cl.⁵: $C08G\ 12/38$, $C08G\ 18/54$

(21) Numéro de dépôt: **86402760.2**

(22) Date de dépôt: **11.12.86**

(54) **Procédé de fabrication de résines aminoplastes modifiées par un isocyanate.**

(30) Priorité: **30.12.85 FR 8519391**

(43) Date de publication de la demande:
**19.08.87 Bulletin 87/34**

(45) Mention de la délivrance du brevet:
**27.01.93 Bulletin 93/04**

(84) Etats contractants désignés:
**AT BE CH DE ES GB GR IT LI LU NL SE**

(56) Documents cités:
**EP-A- 0 001 596**
**EP-A- 0 025 245**
**DE-A- 2 811 593**
**DE-A- 2 832 509**

(73) Titulaire: **ELF ATOCHEM S.A.**
**4 & 8, Cours Michelet La Défense 10**
**F-92800 Puteaux(FR)**

(72) Inventeur: **Garrigue, Roger Gilbert**
**23 rue du Capitaine Escudier**
**F-31000 Toulouse(FR)**
Inventeur: **Lalo, Jack**
**116,avenue Saint Exupéry**
**F-31400 Toulouse(FR)**
Inventeur: **Royer, Pierre**
**7 Rue des Cèdres**
**F-31270 Villeneuve Tolosane(FR)**

(74) Mandataire: **Rochet, Michel et al**
**ELF ATOCHEM S.A. Département Propriété**
**Industrielle 4-8, Cours Michelet La Défense**
**10 - Cedex 42**
**F-92091 Paris-La-Défense(FR)**

Rank Xerox (UK) Business Services

**Description**

La présente invention concerne un procédé de fabrication de résines aminoplastes modifiées par un isocyanate, elle a plus particulièrement pour objet un procédé de fabrication d'aminoplastes qui permet de fabriquer des panneaux agglomérés présentant des émanations de formol réduites et possédant des propriétés mécaniques améliorées.

Les panneaux agglomérés sont habituellement fabriqués par pressage à chaud d'une masse de copeaux de bois ou d'une autre matière cellulosique en mélange avec des liants en particulier de solutions de résines urée-formol ou mélamine-urée-formol. Les températures de pressage sont généralement d'environ 150 à 220°C afin d'obtenir une bonne adhésion des copeaux pour un délai de fabrication acceptable mettant en oeuvre des pressions élevées jusqu'à 70 bars.

Le principal inconvénient des résines aminoplates est de provoquer des émanations élevées de formol libre. On a essayé de réduire le taux de formol libre en mettant au point divers procédés de fabrication : malheureusement lorsque l'on veut atteindre des taux de formol particulièrement bas, l'expérience montre que cet objectif s'accompagne d'une dégradation des propriétés mécaniques des panneaux finis. On a aussi proposé pour supprimer le formol libre l'utilisation des résines dépourvues de formol en particulier les résines à base de solutions d'isocyanates voir EP-A-0 025 245. Malheureusement le problème du formol est remplacé par celui des isocyanates dont l'action sur l'homme est plus néfaste et plus durable que ne l'est le formol puisqu'on a mis en évidence la présence de groupes isocyanates libres dans des panneaux même après plusieurs années de fabrication. De plus la mise en oeuvre de telles résines sur les presses posent de sérieux problèmes de démoulage à cause de l'affinité des isocyanates pour les parties métalliques. Il a été aussi proposé de mettre en oeuvre des procédés consistant à pulvériser séparément les deux liants sur les copeaux : leur mise en oeuvre est délicate à cause du faible taux d'isocyanate qu'il est économiquement possible d'utiliser.

Le besoin se fait donc sentir de mettre au point des résines aminoplates présentant des taux de formol réduits et dont l'utilisation conduit à des panneaux finis dégageant peu de formol et présentant de bonnes caractéristiques mécaniques.

La présente invention concerne un procédé de fabrication de résines aminoplastes modifiées par un isocyanate caractérisé en ce que la résine aminoplaste mise en oeuvre est obtenue par condensation de mélamine et de formurée sur une résine urée-formol de rapport molaire $\frac{F}{U}$ compris entre 0,9 et 2, la quantité de mélamine mise en oeuvre étant au plus égale à 25% et au moins égale à 10% en poids par rapport au poids de la solution de résine finie, la formurée mise en oeuvre ayant un rapport molaire $\frac{F}{U}$ compris entre 4 et 10, la quantité ajoutée étant au plus égale à 70% en poids par rapport au poids de la solution de résine urée-formol de départ, la condensation de la mélamine et de la formurée étant suivie par une étape d'addition de toluène di-isocyanate en quantité au plus égale à 10% en poids par rapport au poids de la solution de résine finie.

On a trouvé qu'en opérant dans ces conditions on obtenait des résines aminoplastes qui permettent de fabriquer des panneaux finis présentant des taux de formol réduits et des propriétés mécaniques améliorées. On a aussi trouvé qu'il n'était pas possible d'obtenir des résines aminoplastes convenables contenant du toluène-di-isocyanate en se contentant d'additionner simplement le toluène-di-isocyanate à des résines urée-formol : une telle introduction dans les résines aminoplastes provoque une réaction exothermique et conduit à un mélange inutilisable par suite de la formation de mousses.

Le procédé de la présente demande consiste à condenser de la mélamine et de la formurée sur une résine urée-formol. La quantité de mélamine mise en oeuvre est au plus égale à 25% et au moins égale à 10% en poids par rapport au poids de la résine finie. La mise en oeuvre de quantité inférieure à 10% en poids conduit à des panneaux finis ayant une faible résistance à l'eau. La formurée utilisée a un rapport molaire $\frac{F}{U}$ compris entre 4 et 10, la quantité utilisée étant au plus égale à 70% par rapport au poids de la solution de résine urée-formol de départ.

Les résines urée-formol mises en oeuvre selon le procédé de l'invention sont des résines connues qui présentent un rapport molaire $\frac{F}{U}$ compris entre 0,9 et 2. De façon connue elles sont préparées par condensation de formol et d'urée à pH compris entre 4 et 7 et à une température voisine de l'ébullition : de préférence cette réaction de condensation est réalisée en plusieurs étapes.

La réaction de condensation de la mélamine et de la formurée à la résine urée-formol est réalisée à une température comprise entre 60 et 100°C à pH compris entre 6 et 10. De façon préférentielle toute la mélamine et la formurée sont ajoutées en totalité à la résine urée-formol à une température comprise entre 40 et 100°C, et en maintenant le pH supérieur à 6 jusqu'à dissolution totale de la mélamine.

Selon l'invention on ajoute ensuite du toluène di-isocyanate au mélange réactionnel en quantité au plus égale à 10% en poids par rapport au poids de solution de résine finie. On a en effet trouvé que la mise en oeuvre de quantités supérieures à 10% en poids provoquait des augmentations élevées de la viscosité des résines finies ainsi qu'un chute importante de la tolérance à l'eau. L'introduction du toluène di-isocyanate est réalisée à une température voisine de 50°C en maintenant le pH de préférence compris entre 6 et 8 de préférence compris entre 7 et 7,5. L'introduction du toluène di-isocyanate peut être réalisée de préférence sous vide ou sous barbotage de gaz carbonique ce qui permet de fabriquer des panneaux à caractéristiques améliorées.

Tous les isocyanates organiques ne conviennent pas pour la mise en oeuvre du procédé de l'invention. C'est ainsi qu'on a constaté que le 4,4′ diphénylméthane diisocyanate appelé M.D.I. qui est parmi les isocyanates le plus connu conduisait à des résines finies non homogènes. Selon l'invention on utilise le toluène-diisocyanate (T.D.I.) [2,4 et/ou 2,6].

Les exemples suivants illustrent la présente invention.

## EXEMPLE 1

On utilise une résine urée-formol qui présente les caractéristiques suivantes
$\frac{F}{U}$ = 1,05
Extrait sec : 59%
pH : 7,8

A 100 parties en poids de la résine urée-formol on ajoute 42 parties de mélamine et 52 parties de formurée présentant un rapport molaire $\frac{F}{U}$ de 5. Le mélange réactionnel est chauffé à 60°C.

A la résine obtenue on ajoute 3 parties en poids de toluène-di-isocyanate (T.D.I.) à 50°C.

Le tableau 1 résume les caractéristiques des résines obtenues ainsi que les caractéristiques des panneaux fabriqués selon les conditions suivantes :
- conformation monocouche panneau 45 x 55 x 1,7 cm,
- copeaux :
mélange CI/CE 2/3/1/3
humidité :2%
essence : mélange de bois feuillus,
- encollage : 10% résine sèche/copeaux secs,
- durcisseur : 1,5% $NH_4Cl$/résine sèche,
- prépassage : 1 minute - pression 5daN/cm$^2$
- cuisson : 4 minutes - pression 22 daN/cm$^2$ - température 180°C.

## TABLEAU 1

| T.D.I. | | Sans | 3 parties |
|---|---|---|---|
| RESINES | Extrait sec (%) | 65,7 | 67,2 |
| | viscosité Pa/s | 0.5 | 2,7 |
| | Temps gel 80°C | 9 min 50 s | 10 min 30 s |
| PANNEAUX | Densité (Kg/m³) | 778 | 767 |
| | Traction sec(daN/cm²) | 8,2 | 9,4 |
| | V 100 (daN/cm²) | 0,3 | 0,7 |
| | V 313 (daN/cm²) | 2,1 | 3,3 |
| | Gonflement (%) 24 H | | |
| | (eau 20°C) | 7,0 | 6,0 |
| | V 313 | 16,8 | 15,2 |
| | Formol | | |
| | perforateur | 9 | 7 |
| | (mg/100g) | | |

### EXEMPLE 2

L'exemple 1 est répété en mettant en oeuvre une résine urée-formol moins condensée.

Le tableau 2 résume les caractéristiques des résines obtenues avec et sans TDI ainsi que les caractéristiques des panneaux :

## TABLEAU 2

| QUANTITE | T.D.I. | Sans | 5 parties |
|---|---|---|---|
| RESINES | Extrait sec (%) | 65,0 | 65,0 |
| | Viscosité (Pa/s) | 0,34 | 3,2 |
| | Temps gel 80°C | 5 min 55 s | 4 min 30 s |
| PANNEAUX | Densité (Kg/m³) | 704 | 693 |
| | Traction sec(daN/cm²) | 8,0 | 9,5 |
| | V 100 (daN/cm²) | 1,8 | 1,9 |
| | V 313 (daN/cm²) | 4,2 | 4,9 |
| | Gonflement (%) 24 H (eau 20°C) | 7,4 | 7,2 |
| | V 313 | 10,0 | 8,4 |
| | Formol perforateur (mg/100g) | 18 | 11 |

## EXEMPLE 3

L'exemple 1 est répété mais en mettant en oeuvre une résine urée formol ayant un degré de condensation différent de celui de l'exemple 1. Le T.D.I. est ajouté en 20 minutes à 75°C.

Le tableau 3 résume les caractéristiques des résines obtenues ainsi que les caractéristiques de panneaux finis.

# EP 0 232 642 B1

## TABLEAU 3

| | T.D.I. (parties) | Sans | 5 parties |
|---|---|---|---|
| **RESINES** | Extrait sec (%) | 64,4 | 64,4 |
| | Viscosité (Pa/s) | 0,26 | 2,22 |
| | Temps gel 80°C (secondes) | 510 | 340 |
| **PANNEAUX** | Mas. vol.(Kg/m³) | 674 | 685 |
| | Tract.(daN/cm²) | | |
| | - sec | 9,7 | > 12 |
| | - V 100 | 0,65 | 1,5 |
| | - V 313 | 2,7 | 4,3 |
| | Gonflements (%) | | |
| | - 24 H | 11,5 | 12,5 |
| | - V 313 | 15,6 | 15,4 |
| | Humidité (%) | 8,4 | 8,2 |
| | Perforateur (mg/100 g) | 16,3 | 12,4 |

**EXEMPLE 4**

L'exemple 1 est répété en utilisant la même résine urée-formol de départ mais en introduisant le T.D.I. dans la résine sous vide et aussi sous barbotage de gaz carbonique.

Le tableau 4 résume les caractéristiques des panneaux obtenus.

6

EP 0 232 642 B1

## TABLEAU 4

| T.D.I. | Sans | 5% T.D.I. sous vide | 5% T.D.I. sous $CO_2$ |
|---|---|---|---|
| Masse vol. (kg/m³) | 695 | 683 | 684 |
| Traction (daN/cm²) | | | |
| - à sec | 12,2 | 12,9 | 13 |
| - V 100 | 2,65 | 2,8 | 3,15 |
| Gonflement V 20 (%) | 5,4 | 5,7 | 5,7 |
| Humidité (%) | 7,3 | 7,2 | 7,1 |
| Perforateur (mg/100g) | 14,5 | 10,8 | 11,8 |

Les propriétés mécaniques ont été déterminées selon les normes suivantes

Epaisseur, masse volumique : Norme NFB 51222
Humidité : Norme NFB 51221
Traction : Norme NFB 51250
Traction V 100 : Norme NFB 51262
Traction V 313 : Norme NFB 51263
Gonflement : Norme NFB 51252
Teneur en formol perforateur : Norme EN 120

**Revendications**

1. Procédé de fabrication de résines aminoplastes modifiées par un isocyanate caractérisé en ce que le procédé est réalisé en deux étapes selon lequel la résine aminoplaste mise en oeuvre est obtenue par condensation dans une première étape de mélamine et de formurée sur une résine urée-formol, la résine urée-formol ayant un rapport molaire $\frac{F}{U}$ compris entre 0,9 et 2, la formurée ayant un rapport molaire F/U compris entre 4 et 10, la quantité de mélamine mise en oeuvre étant comprise entre 10 et 25 % en poids par rapport au poids de la solution de résine finie, la quantité de formurée étant au plus égale à 70 % en poids et au moins 52 % en poids par rapport au poids de la solution de résine urée-formol de départ, la solution de résine urée-formol de départ présentant un extrait sec voisin de 59 % en poids, cette première étape étant suivie d'une seconde étape d'addition de toluène diisocyanate en quantité comprise entre 1,5 et 10 % en poids par rapport au poids de la solution de résine finie, le toluène diisocyanate étant ajouté à une température voisine de 50°C en maintenant le pH compris entre 6 et 8, la résine finie présentant un extrait sec compris entre 64,4 et 67,2 %.

**Claims**

1. Process for the manufacture of aminoplastic resins modified by an isocyanate, characterized in that the process is carried out in two stages, according to which the aminoplastic resin used is obtained by condensation, in a first stage, of melamine and of formurea with a urea-formaldehyde resin, the urea-formaldehyde resin having a molar ratio F/U of between 0.9 and 2, the formurea having a molar ratio F/U of between 4 and 10, the quantity of melamine used being between 10 and 25 % by weight relative to the weight of the finished resin solution, the quantity of formurea being not more than 70 % by weight and at least 52 % by weight relative to the weight of the solution of starting urea-formaldehyde resin, the solution of starting urea-formaldehyde resin exhibiting a solids content in the neighbourhood of 59 % by weight, this first stage being followed by a second stage of addition of toluene diisocyanate in a quantity of between 1.5 and 10 % by weight relative to the weight of the finished resin solution, the toluene diisocyanate being added at a temperature in the neighbourhood of 50°C while the pH is maintained between 6 and 8, the finished resin exhibiting a solids content of between 64.4 and 67.2 %.

**Patentansprüche**

1. Verfahren zur Herstellung von durch ein Isocyanat modifizierten Aminoplastharzen, dadurch gekennzeichnet, daß das Verfahren in zwei Schritten durchgeführt wird, gemäß welchen das eingesetzte Aminoplastharz in einem ersten Schritt durch Kondensation von Melamin und Formolharnstoff über einem Harnstoff-Formol-Harz erhalten wird, wobei das Harnstoff-Formol-Harz ein Molverhältnis F/U zwischen 0,9 und 2 aufweist, der Formolharnstoff ein Molverhältnis F/U zwischen 4 und 10 aufweist, die eingesetzte Melaminmenge zwischen 10 und 25 Gew.-%, bezogen auf das Gewicht der fertigen Harzlösung, beträgt, die Formolharnstoffmenge höchstens 70 Gew.-% und wenigstens 52 Gew.-%, bezogen auf das Gewicht der Harnstoff-Formol-Harz-Ausgangslösung, beträgt, die Harnstoff-Formol-Harz-Ausgangslösung einen Trockenauszug von etwa 59 Gew.-% aufweist, und wobei auf diesen ersten Schritt ein zweiter Schritt der Zugabe von Toluoldiisocyanat in einer Menge zwischen 1,5 und 10 Gew.-%, bezogen auf das Gewicht der fertigen Harzlösung, folgt, wobei das Toluoldiisocyanat bei einer Temperatur von etwa 50°C unter Halten des pH-Werts zwischen 6 und 8 zugegeben wird, und wobei das fertige Harz einen Trockenauszug zwischen 64,4 und 67,2% aufweist.